# EUROPEAN PATENT APPLICATION

(11) **EP 3 862 081 A1**
(43) Date of publication of application: **11.08.2021**
(21) Application number: 19950229.5
(22) Date of filing: 26.11.2019
(51) Int. Cl.: B01J 29/72, B01J 37/30, B01D 53/94, B01D 53/56

(54) **MOLECULAR SIEVE CU-SSZ-13, SYNTHESIS METHOD THEREFOR, CATALYST, AND USE**

(30) Priority: 31.10.2019 CN 201911055296
(71) Applicant: Shandong Sinocera Functional Material Co., Ltd, Dongying, Shandong 257091 (CN)
(72) Inventor: SONG, Xibin, Dongying, Shandong 257091 (CN); ZHANG, Bing, Dongying, Shandong 257091 (CN); ZHANG, Xi, Dongying, Shandong 257091 (CN)
(74) Representative: Chas. Hude A/S
(86) International application number: PCT/CN2019/120866
(87) International publication number: WO 2021/082139

(57) **Abstract**

The present application discloses a molecular sieve Cu-SSZ-13, its synthesis method, a catalyst and the application of the catalyst in the treatment of exhaust gas of motor vehicles, especially its application in the treatment of exhaust gas of diesel vehicles, belonging to the field of catalytic materials. The content of copper calculated on the basis of CuO in the molecular sieve Cu-SSZ-13 is 2.56 to 3.69 wt%, and the content of non-framework aluminum in the molecular sieve before adding copper is 0 to 8 wt%. The Cu-SSZ-13 of the present application has a specific combination of contents of copper and non-framework aluminum, improves the selectivity of N₂ generated in the selective catalytic reduction of ammonia, reduces the selectivity of N₂O, and can control the N₂O in the product within 15 ppm. Cu-SSZ-13 as a catalyst has good resistance to hydrothermal aging, and has significant performance advantages in the application in the treatment of exhaust gas of diesel vehicles.

## Description

The present application claims the priority to the Chinese patent application No. 201911055296.6, entitled "Molecular Sieve Cu-SSZ-13, its synthesis method, catalyst and use thereof" filed with the China National Intellectual Property Administration on November 1, 2009, the disclosure of which is incorporated in the present application by reference in its entirety.

### Technical Field

The present application relates to a molecular sieve Cu-SSZ-13, its synthesis method, a catalyst and application of the catalyst in the treatment of exhaust gas of motor vehicles, especially its application in the treatment of exhaust gas of diesel vehicles, which belongs to the field of catalytic materials.

### Background Art

Compared with gasoline engines, diesel engines have obvious advantages in power output, operational reliability, fuel economy and carbon dioxide emissions. Therefore, there has been a worldwide trend of car dieselization. However, with the increasingly stringent environmental regulations of many major economies around the world, it has become particularly important to solve the problem of exhaust gas pollution of diesel vehicles.

Because diesel engines have a relatively high air-fuel ratio, this feature is the main guarantee for their fuel economy, but it also brings the disadvantage of emission of a large amount of nitrogen oxides (NOx) in the exhaust gas of diesel vehicles. Ammonia selective catalytic reduction (NH₃-SCR) is currently the most effective aftertreatment technology for NOx in the exhaust gas of diesel vehicles. Copper (Cu) supported eight-membered ring small pore molecular sieve Cu-SSZ-13 catalyst has a high NOx conversion rate, and due to its prominent advantages such as excellent thermal and hydrothermal stability and good resistance to hydrocarbon (HC) poisoning, it has been successfully commercialized as a catalyst for the NH₃-SCR process of exhaust gas of diesel vehicles.

SSZ-13 molecular sieve has a three-dimensional eight-membered ring pore system, the pore size is 0.38 nm×0.38 nm, and the skeleton structure code is CHA. In the NH₃-SCR process of aftertreatment of the exhaust gas of diesel vehicles with the Cu-SSZ-13 molecular sieve as catalyst, the main reactions are as follows: 4NO+4NH₃+O₂→4N₂+6H₂O, and NO+2NH₃+NO₂→2N₂+3H₂O; and the main side reactions are as follows: 2NO₂+2NH₃+H₂O →NH₄NO₃+NH₄NO₂, NH₄NO₃→N₂O+2H₂O, and 2NH₃+2O₂→N₂O+3H₂O. It can be seen that under normal reaction conditions, with the help of ammonia molecules (NH₃) as a reducing agent produced by the decomposition of urea, the copper-containing SSZ-13 molecular sieve catalyst can convert gaseous pollutants NOx (including NO and NO₂) into non-toxic harmless nitrogen gas (N₂), with nitrous oxide (N₂O) as the most important by-product in the NH₃-SCR process. N₂O is a kind of gas that can strongly trigger the greenhouse effect. For equivalent amounts of N₂O and CO₂, the greenhouse effect caused by N₂O is 300 times that of CO₂, and if N₂O is allowed to be directly discharged into the atmosphere, it will inevitably cause serious air pollution. Therefore, improving the N₂ selectivity of the copper-containing SSZ-13 molecular sieve catalyst in the NH₃-SCR process and thereby inhibiting the catalytic generation of N₂O is an important aspect of improving and enhancing the performance of the catalyst.

### Summary of the Invention

In order to solve the above problems, a molecular sieve Cu-SSZ-13, its synthesis method, a catalyst and use thereof are provided. The Cu-SSZ-13 of the present application has a specific combination of the contents of copper and non-framework aluminum, improves the selectivity of N₂ generated in the ammonia selective catalytic reduction, reduces the selectivity of N₂O, and can control the N₂O in the product within 15 ppm. Cu-SSZ-13 as a catalyst has good resistance to hydrothermal aging, and has significant performance advantages in the application in the treatment of exhaust gas of diesel vehicles.

According to one aspect of the present application, a molecular sieve Cu-SSZ-13 is provided, in which the content of copper calculated on the basis of CuO is 2.56 to 3.69 wt%, and the content of non-framework aluminum in the molecular sieve before adding copper is 0 to 8 wt%.

Optionally, the molecular sieve before adding copper is a molecular sieve which is roasted before copper ion exchange.

Optionally, the content of non-framework aluminum is calculated based on the test results of the ²⁷Al NMR spectrum.

Optionally, the content of copper calculated on the basis of CuO in the Cu-SSZ-13 is 2.63 to 3.63 wt%. Preferably, the content of copper calculated on the basis of CuO in the Cu-SSZ-13 is 2.81 to 3.44 wt%. More preferably, the content of copper calculated on the basis of CuO in the Cu-SSZ-13 is 3.10 to 3.40 wt%.

Optionally, the content of non-framework aluminum in the molecular sieve before adding copper is 0 to 7.4 wt%. Preferably, the content of non-framework aluminum in the molecular sieve before adding copper is 0.5 to 5.8 wt%. Preferably, the content of non-framework aluminum in the molecular sieve before adding copper is 0.5 to 4.2 wt%. More preferably, the content of non-framework aluminum in the molecular sieve before adding copper is 0.5 to 3.1 wt%. More preferably, the content of non-framework aluminum in the molecular sieve before adding copper is 1.6 to 3.1 wt%.

Optionally, the Cu-SSZ-13 is a molecular sieve SSZ-13 subjected to copper ion-exchange.

Optionally, the molar ratio of silica to alumina in the Cu-SSZ-13 is 16.95 to 27.28. Preferably, the molar ratio of silica to alumina in the Cu-SSZ-13 is 17 to 25. More preferably, the molar ratio of silica to alumina in the Cu-SSZ-13 is 19.04 to 23.16.

Optionally, the specific surface area of the Cu-SSZ-13 is not less than 550 m²/g.

Optionally, the total pore volume of the Cu-SSZ-13 is not less than 0.30 cm³/g.

According to another aspect of the present application, the provided is a preparation method of the molecular sieve Cu-SSZ-13, which comprises the following steps:
1) providing a template-containing SSZ-13 molecular sieve, and performing a first roasting step to obtain a SSZ-13 molecular sieve;
2) subjecting the product of step 1) to exchange with NH₄⁺ to obtain a precursor NH₄-SSZ-13; and
3) introducing a copper source into the precursor NH₄-SSZ-13 by a liquid-phase ion exchange method, and performing a second roasting step to obtain the Cu-SSZ-13;
wherein, the content of non-framework aluminum in the SSZ-13 molecular sieve is detected to be 0 to 8 wt%.

Optionally, the preparation method of the template-containing SSZ-13 molecular sieve comprises:
(1) mixing an aluminum source, a silicon source, a template, an alkali source and deionized water to obtain an initial mixture; and
(2) subjecting the initial mixture obtained in step (1) to crystallization at 150 to 200°C for 12 to 96 h under authigenic pressure to obtain the template-containing SSZ-13 molecular sieve;
wherein, the molar ratio of the template to the silicon source in the initial mixture is 0.12 to 0.22; and
the template is at least one selected from N,N,N-trimethyladamantamine hydroxide, benzyltrimethylamine and choline.

Optionally, the molar ratio of the template to the silicon source in the initial mixture is 0.15 to 0.22. Optionally, the molar ratio of the template to the silicon source in the initial mixture is 0.15 to 0.20.

Optionally, the step 1) further comprises acid pickling after the first roasting step.

Preferably, the acid pickling comprises: stirring the SSZ-13 molecular sieve in 0.05 to 0.15 mol/L hydrochloric acid at 40 to 60°C for at least 20 min, then peforming solid-liquid separation, washing and drying.

Optionally, the copper source is at least one selected from copper acetate, copper nitrate and copper sulfate.

Optionally, the temperature of the liquid-phase ion exchange is 20 to 90°C, and the time of the liquid-phase ion exchange is 0.5 to 24 h.

Optionally, the first roasting step comprises: raising the temperature from room temperature to 550 to 650°C at a rate of 8 to 12°C/min and roasting for 3 to 7 h; or
raising the temperature from room temperature to 300 to 400°C at a rate of 1 to 4°C/min, maintaining for 1 to 5 h, then rising to 500 to 600°C at a rate of 1 to 3°C/min and maintaining for 3 to 7 h.

Preferably, the first roasting step comprises: raising the temperature from room temperature to 620°C at a rate of 10°C/min and roasting for 5 h; or
raising the temperature from room temperature to 360°C at a rate of 2°C/min, and maintaining for 3 h, then raising the temperature to 560°C at a rate of 2°C/min, and maintaining for 5 h.

Optionally, the second roasting step comprises: roasting in air atmosphere at 500 to 600°C for 2 to 5 h. Preferably, the second roasting step comprises: roasting in air atmosphere at 550°C for 4 h.

The SSZ-13 molecular sieve in the present application is selected from Na-SSZ-13 molecular sieve, K-SSZ-13 molecular sieve and/or K-Na-SSZ-13.

According to another aspect of the present application, the provided is a catalyst comprising Cu-SSZ-13, and the Cu-SSZ-13 is at least one selected from the Cu-SSZ-13 described in any one of the above and the Cu-SSZ-13 prepared according to the method described in any one of the above.

Optionally, the catalyst comprises the Cu-SSZ-13 deposited on a honeycomb substrate.

Preferably, the honeycomb substrate is selected from a wall-flow substrate or a flow-through substrate.

Optionally, the catalyst further comprises a binder, and the binder is zirconium dioxide-based binder.

According to another aspect of the present application, the provided is use of any one of the above-mentioned catalysts in the selective catalytic reduction of ammonia with a selectivity of nitrous oxide lower than 15 ppm.

According to another aspect of the present application, the provided is an exhaust gas treatment method, comprising contacting NOx-containing combustion exhaust gas with any one of the above-mentioned catalysts.

According to another aspect of the present application, the provided is an exhaust gas treatment system, wherein the exhaust gas treatment system comprises any one of the above-mentioned catalysts, wherein the exhaust gas is transported from the diesel engine to a downstream position of the exhaust gas system, where a reducing agent is added, and the exhaust gas stream containing the added reducing agent is transported to any one of the above-mentioned catalysts.

Optionally, the reducing agent is ammonia gas.

The beneficial effects of the present application comprise but are not limited to the following aspects:
1. The molecular sieve Cu-SSZ-13 according to the present application has a specific combination of contents of copper and non-framework aluminum, and when used as a catalyst, it improves the selectivity of N₂ generated in selective catalytic reduction of ammonia and reduces the selectivity of N₂O, and can control the N₂O in the product within 15 ppm.
2. The molecular sieve Cu-SSZ-13 according to the present application has a specific combination of contents of copper and non-framework aluminum, and when used as a catalyst for selective catalytic reduction of ammonia, it avoids the formation of CuAlOx substances during practical use, and fundamentally achieves the improvement of the selectivity of N₂.
3. The catalyst according to the present application exhibits a high NOx conversion rate and high selectivity of generated N₂ in the catalysis of selective catalytic reduction of ammonia.
4. In the application of the molecular sieve Cu-SSZ-13 molecular sieve catalyst according to the present application in the exhaust gas treatment of diesel vehicles, the Cu-SSZ-13 molecular sieve catalyst has good resistance to hydrothermal aging, and has significant performance advantages when applied to the exhaust gas treatment process of diesel vehicles.

### Brief Description of the Drawings

The drawings described herein are used to provide a further understanding of the present application and constitute a part of the present application. The exemplary embodiments and descriptions of the present application are used to explain the present application, and do not constitute an improper limitation to the present application. In the drawings:
Figure 1 shows the ²⁷ Al NMR spectra of the template-containing Na-SSZ-13 molecular sieve 1 (1), the template-free Na-SSZ-13 molecular sieve 1A (1A), and the template-free Na-SSZ-13 molecular sieve 1B (1B) involved in Example 1 of the present application.
Figure 2 shows the ²⁷ Al NMR spectra of the template-free Na-SSZ-13 molecular sieve 5A (5A) and the template-free Na-SSZ-13 molecular sieve 5B (5B) involved in Example 5 of the present application.
Figure 3 shows the ²⁷ Al NMR spectra of the template-containing Na-SSZ-13 molecular sieve R1 (R1), the template-free Na-SSZ-13 molecular sieve R1A (R1A), and the template-free Na-SSZ-13 molecular sieve R1B (R1B).

### Specific Modes for Carrying Out the Embodiments

The present application will be described in detail below in conjunction with Examples, but the present application is not limited to these Examples.

Unless otherwise specified, the raw materials in the Examples of the present application are all purchased through commercial channels.

The analysis methods in the Examples of the present application are as follows:
The silicon-to-aluminum ratio of the samples was analyzed using the Rigaku ZSX Primus II X-ray fluorescence spectrometer.

The copper content of the samples was analyzed using the U. S. Agilent Varian 715-ES plasma emission spectrometer.

The content of non-framework aluminum of the samples was analyzed using the Bruke AVANCE III solid-state nuclear magnetic resonance spectrometer from Bruke company, Germany.

The conversion rate in the Examples of the present application was calculated as follows:
NO conversion rate = (NO concentration at the reactor inlet - NO concentration at the reactor outlet)/(NO concentration at the reactor inlet) * 100%
In the Examples of the present application, the NO conversion rate is calculated based on the mole number of nitrogen.

According to an embodiment of the present application, firstly, a Na-SSZ-13 molecular sieve was prepared by hydrothermal synthesis, and then Na-SSZ-13 molecular sieve was subjected to a first roasting step to remove the template therein, and to ammonium exchange to obtain a NH₄-SSZ-13 molecular sieve. Finally, liquid-phase ion exchange of copper was performed, and a second roasting was performed to obtain a Cu-SSZ-13 molecular sieve. Further, an acid pickling step could be included between the first roasting step and the ammonium exchange.

### Example 1: Preparation of Cu-SSZ-13 molecular sieves 1C, 1D, and 1E

### Template-containing Na-SSZ-13 molecular sieve 1

426.0 g of 25 wt% N,N,N-trimethylamantadine hydroxide as a template was added into 363.0 g of deionized water and mixed well, then 7.5 g of sodium hydroxide was added thereto and stirred until fully dissolved, then 48.0 g of aluminum isopropoxide was added therein and mixed well, and finally 150.0 g of white carbon black (precipitation method, the content of SiO₂ is 93 wt%) was added and fully stirred for 2 h to obtain an initial mixture. The molar ratio of Al₂O₃, SiO₂, N,N,N-trimethylamantadine hydroxide, OH⁻ and H₂O in the initial mixture was 1:20.17:4.41:6.00:328.48, wherein the molar ratio of the template (referred to as R) to silica was 0.22 (R/SiO₂ = 0.22). The above mixture was transferred to a stainless steel reactor lined with polytetrafluoroethylene, the reactor was placed in an oven to perform crystallization at 170°C for 48 h, then taken out, and quenched, and the crystallization product was subjected to solid-liquid separation, washing, and drying to obtain an original powder of template-containing Na-SSZ-13 molecular sieve named as Na-SSZ-13 molecular sieve 1, with SiO₂/Al₂O₃ = 18.94.

### Template-free Na-SSZ-13 molecular sieve 1A

The synthesized Na-SSZ-13 molecular sieve 1 was roasted by the steps of placing the Na-SSZ-13 molecular sieve 1 in a muffle furnace, raising the temperature from room temperature to 620°C at a rate of 10°C/min and roasting for 5 h to obtain a template-free Na-SSZ-13 molecular sieve named as Na-SSZ-13 molecular sieve 1A, with SiO₂/Al₂O₃ = 19.16.

### Template-free Na-SSZ-13 molecular sieve 1B

The synthesized Na-SSZ-13 molecular sieve 1 was roasted by the steps of placing the Na-SSZ-13 molecular sieve 1 in a muffle furnace, raising the temperature from room temperature to 360°C at a rate of 2°C/min and maintaining for 3 h, then raising the temperature to 560°C at a rate of 2°C/min and maintaining for 5 h to obtain a template-free Na-SSZ-13 molecular sieve named as Na-SSZ-13 molecular sieve 1B, with SiO₂/Al₂O₃ = 19.23.

### Cu-SSZ-13 molecular sieve 1C

The prepared Na-SSZ-13 molecular sieve 1A was sequentially subjected to ammonium exchange and copper exchange.

The Na-SSZ-13 molecular sieve 1B was subjected to exchange with 1 mol/L ammonium chloride solution at a solid-liquid ratio of 1:10 at 90°C for 2 h, and then subjected to solid-liquid separation, washing, and drying so as to obtain NH₄-SSZ-13 molecular sieve.

36.0 g of copper acetate (Cu(CH₃COO)_{2·}H₂O) was weighed and dissolved in 500 mL deionized water to prepare a copper acetate aqueous solution. 50 g of the NH₄-SSZ-13 molecular sieve obtained in the above step was weighed and added to the above-mentioned copper acetate solution. The pH value of the above mixture was adjusted to a value between 4.8 and 5.0 with dilute nitric acid, then the above mixture was stirred at 70°C for 2 h, suction filtered, dried, and finally roasted in air atmosphere at 550°C for 4 h to obtain the Cu-SSZ-13 molecular sieve 1C.

The obtained Cu-SSZ-13 molecular sieve 1C has a SiO₂/Al₂O₃ ratio of 19.04, and the content of copper calculated on the basis of CuO is 3.02 wt%.

### Cu-SSZ-13 molecular sieve 1D

The obtained Na-SSZ-13 molecular sieve 1B was sequentially subjected to ammonium exchange and copper exchange, and the experimental methods, steps and experimental conditions were exactly the same as those for the preparation of Cu-SSZ-13 molecular sieve 1C.

The obtained Cu-SSZ-13 molecular sieve 1D has a SiO₂/Al₂O₃ ratio of 19.09, and the content of copper calculated on the basis of CuO is 3.06 wt%.

### Cu-SSZ-13 molecular sieve 1E

The obtained Na-SSZ-13 molecular sieve 1B was sequentially subjected to ammonium exchange and copper exchange. The experimental steps and methods were exactly the same as those for the preparation of Cu-SSZ-13 molecular sieve 1C, and the experimental conditions were same except that the copper exchange time was extended from 2 h to 2.5 h.

The obtained Cu-SSZ-13 molecular sieve 1E has a SiO₂/Al₂O₃ ratio of 19.05, and the content of copper calculated on the basis of CuO is 3.40 wt%.

### Example 2: Preparation of Cu-SSZ-13 molecular sieves 2B and 2C

### Template-containing Na-SSZ-13 molecular sieve 2

A raw powder of template-containing Na-SSZ-13 molecular sieve was synthesized according to the method and steps for preparing the template-containing Na-SSZ-13 molecular sieve 1 in Example 1, under the same experimental conditions except for using 9.8 g of aluminum isopropoxide instead of 48.0 g of aluminum isopropoxide, wherein the molar ratio of Al₂O₃, SiO₂, N,N,N-trimethylamantadine hydroxide, OH⁻ and H₂O in the initial mixture was 1:24.68:5.40:7.35:402.06, and the molar ratio of the template (referred to as R) to silica was 0.22 (R/SiO₂=0.22). The synthesized raw powder of the template-containing Na-SSZ-13 molecular sieve has a SiO₂/Al₂O₃ ratio of 22.12, and is named as Na-SSZ-13 molecular sieve 2.

### Template-free Na-SSZ-13 molecular sieve 2A

The Na-SSZ-13 molecular sieve 2 was roasted by the steps of placing the Na-SSZ-13 molecular sieve 2 in a muffle furnace, raising the temperature from room temperature to 360°C at a rate of 2°C/min and maintaining for 3 h, and then raising the temperature to 560°C at a rate of 2°C/min and maintaining for 5 h, to obtain a template-free Na-SSZ-13 molecular sieve named as Na-SSZ-13 molecular sieve 2A, with SiO₂/Al₂O₃ = 22.17.

### Cu-SSZ-13 molecular sieve 2B

According to the method and steps of preparing Cu-SSZ-13 molecular sieve 1C in Example 1, the Na-SSZ-13 molecular sieve 2A was sequentially subjected to ammonium exchange and copper exchange, with the copper exchange time changed from 2 h to 1.5 h and the other experimental conditions unchanged, to obtain a Cu-SSZ-13 molecular sieve 2B.

The obtained Cu-SSZ-13 molecular sieve 2B has a SiO₂/Al₂O₃ ratio of 22.07, and the content of copper calculated on the basis of CuO is 2.81 wt%.

### Cu-SSZ-13 molecular sieve 2C

According to the method and steps for preparing Cu-SSZ-13 molecular sieve 1C in Example 1, the Na-SSZ-13 molecular sieve 2A was sequentially subjected to ammonium exchange and copper exchange, with the copper exchange time was extended from 2 h to 2.5 h and other experimental conditions unchanged.

The obtained Cu-SSZ-13 molecular sieve 2C has a SiO₂/Al₂O₃ ratio of 22.01, and the content of copper calculated on the basis of CuO is 3.44 wt%.

### Example 3: Preparation of Cu-SSZ-13 molecular sieves 3B and 3C

### Template-containing Na-SSZ-13 molecular sieve 3

A raw powder of template-containing Na-SSZ-13 molecular sieve was synthesized according to the method and steps for preparing the template-containing Na-SSZ-13 molecular sieve 1 in Example 1, under the same experimental conditions except for using 29.4 g of sodium metaaluminate (the content of alumina Al₂O₃ was 41.00 wt%) instead of 48.0 g of aluminum isopropoxide, wherein the molar ratio of Al₂O₃, SiO₂, N,N,N-trimethylamantadine hydroxide, OH⁻ and H₂O in the initial mixture was 1:19.67:4.00:5.56:309.92, and the molar ratio of the template to silica was 0.20 (R/SiO₂ = 0.20). The synthesized original powder of the template-containing Na-SSZ-13 molecular sieve has a SiO₂/Al₂O₃ ratio of 17.27, and is named as Na-SSZ-13 molecular sieve 3.

### Template-free Na-SSZ-13 molecular sieve 3A

The Na-SSZ-13 molecular sieve 3 was roasted by the steps of placing the Na-SSZ-13 molecular sieve 3 in a muffle furnace, raising the temperature from room temperature to 360°C at a rate of 2°C/min and maintaining for 3 h, then raising the temperature to 560°C at a rate of 2°C/min and maintaining for 5 h, to obtain a template-free Na-SSZ-13 molecular sieve named as Na-SSZ-13 molecular sieve 3A, with SiO₂/Al₂O₃ = 17.12.

### Cu-SSZ-13 molecular sieve 3B

According to the method and steps of preparing Cu-SSZ-13 molecular sieve 1C in Example 1, the Na-SSZ-13 molecular sieve 3A was sequentially subjected to ammonium exchange and copper exchange, with the copper exchange time changed from 2 h to 1 h and the other experimental conditions unchanged, to obtain a Cu-SSZ-13 molecular sieve 3B.

The obtained Cu-SSZ-13 molecular sieve 2B has a SiO₂/Al₂O₃ ratio of 17.06, and the content of copper calculated on the basis of CuO is 2.63 wt%.

### Cu-SSZ-13 molecular sieve 3C

According to the method and steps for preparing Cu-SSZ-13 molecular sieve 1C in Example 1, the Na-SSZ-13 molecular sieve 3A was sequentially subjected to ammonium exchange and copper exchange, with the copper exchange time changed from 2 h to 3 h and the other experimental conditions unchanged to obtain Cu-SSZ-13 molecular sieve 3C.

The obtained Cu-SSZ-13 molecular sieve 3C has a SiO₂/Al₂O₃ ratio of 16.95, and the content of copper calculated on the basis of CuO is 3.63 wt%.

### Example 4: Preparation of Cu-SSZ-13 molecular sieves 4B and 4C

### Template-containing Na-SSZ-13 molecular sieve 4

A raw powder of template-containing Na-SSZ-13 molecular sieve was synthesized according to the method and steps for preparing the template-containing Na-SSZ-13 molecular sieve 1 in Example 1, under the same experimental conditions except for using 19.8 g of sodium metaaluminate (the content of alumina Al₂O₃ was 41.00 wt%) instead of 48.0 g of aluminum isopropoxide, wherein the molar ratio of Al₂O₃, SiO₂, N,N,N-trimethylamantadine hydroxide, OH⁻ and H₂O in the initial mixture was 1:29.21:5.94:8.25:460.18, and the molar ratio of the template to silica was 0.20 (R/SiO₂ = 0.20). The synthesized original powder of the template-containing Na-SSZ-13 molecular sieve has a SiO₂/Al₂O₃ ratio of 27.47, and is named as Na-SSZ-13 molecular sieve 4.

### Template-free Na-SSZ-13 molecular sieve 4A

The Na-SSZ-13 molecular sieve 4 was roasted by the steps of placing the Na-SSZ-13 molecular sieve 4 in a muffle furnace, raising the temperature from room temperature to 360°C at a rate of 2°C/min and maintaining for 3 h, then raising the temperature to 560°C at a rate of 2°C/min and maintaining for 5 h, to obtain a template-free Na-SSZ-13 molecular sieve named as Na-SSZ-13 molecular sieve 4A, with SiO₂/Al₂O₃ = 27.38.

### Cu-SSZ-13 molecular sieve 4B

According to the method and steps for preparing Cu-SSZ-13 molecular sieve 1C in Example 1, the Na-SSZ-13 molecular sieve 4A was sequentially subjected to ammonium exchange and copper exchange, with the copper exchange time changed from 2 h to 1 h and the other experimental conditions unchanged, to obtain a Cu-SSZ-13 molecular sieve 4B.

The obtained Cu-SSZ-13 molecular sieve 4B has a SiO₂/Al₂O₃ ratio of 27.36, and the content of copper calculated on the basis of CuO is 2.56 wt%.

### Cu-SSZ-13 molecular sieve 4C

According to the method and steps for preparing Cu-SSZ-13 molecular sieve 1C in Example 1, the Na-SSZ-13 molecular sieve 4A was sequentially subjected to ammonium exchange and copper exchange, with the copper exchange time changed from 2 h to 3 h and the other experimental conditions unchanged, to obtain Cu-SSZ-13 molecular sieve 4C.

The obtained Cu-SSZ-13 molecular sieve 4C has a SiO₂/Al₂O₃ ratio of 27.28, and the content of copper calculated on the basis of CuO is 3.69 wt%.

### Example 5: Preparation of Cu-SSZ-13 molecular sieve 5C

### Template-containing Na-SSZ-13 molecular sieve 5

94.0 g of 25 wt% N,N,N-trimethylamantadine hydroxide was added to 20.5 g of deionized water and mixed well, then 3.0 g of sodium hydroxide was added thereto and stirred until fully dissolved, then 7.3 g of sodium metaaluminate was added and fully dissolved, and finally 150.0 g of silica sol (the content of SiO₂ was 30 wt%) was added therein and fully stirred for 2 h, wherein the molar ratio of Al₂O₃, SiO₂, N,N,N-trimethylamantadine hydroxide, OH⁻ and H₂O in the initial mixture was 1:25.56:3.82:6.33:370.75, wherein the molar ratio of the template to silica was 0.15 (R/SiO₂ = 0.15). The above mixture was transferred to a stainless steel reactor lined with polytetrafluoroethylene, the reactor was placed in an oven to perform crystallization at 170°C for 48 h, then taken out and quenched, and the crystallization product was subjected to solid-liquid separation, washing and drying to obtain a template-containing Na-SSZ-13 molecular sieve 5 named as Na-SSZ-13 molecular sieve 5, with SiO₂/Al₂O₃ = 23.62.

### Template-free Na-SSZ-13 molecular sieve 5A

The Na-SSZ-13 molecular sieve 5 was placed in a muffle furnace, the temperature was raised from room temperature to 620°C at a rate of 10°C/min and roasting was performed for 5 h to obtain a template-free Na-SSZ-13 molecular sieve named as Na-SSZ-13 molecular sieve 5A, with SiO₂/Al₂O₃ = 23.43.

### Template-free Na-SSZ-13 molecular sieve 5B

100 g of Na-SSZ-13 molecular sieve 5A was added to 800 mL of 0.1 mol/L hydrochloric acid and stirred at 50°C for 30 min, then the resultant was subjected to solid-liquid separation, washing and drying to obtain a Na-SSZ-13 molecular sieve named as Na-SSZ-13 molecular sieve 5B, with SiO₂/Al₂O₃ = 23.31.

### Cu-SSZ-13 molecular sieve 5C

The Na-SSZ-13 molecular sieve 5B was subjected to ammonium exchange with 1 mol/L ammonium chloride solution at a solid-liquid ratio of 1:10 at 90°C for 2 h, and then subjected to solid-liquid separation, washing and drying to obtain a precursor NH₄-SSZ-13.

38.2 g of copper acetate (Cu(CH₃COO)_{2·}H₂O) was weighed and dissolved in 500 mL of deionized water to prepare a copper acetate aqueous solution. 50 g of the NH₄-SSZ-13 molecular sieve obtained in the above step was weighed and added into the above-mentioned copper acetate solution, the pH value of the above mixture was adjusted to a value between 4.8 and 5.0 with dilute nitric acid, then the above mixture was stirred at 70°C for 2 h, suction filtered, dried, and finally roasted in an air atmosphere at 550°C for 4 h to obtain a Cu-SSZ-13 molecular sieve 5C.

The obtained Cu-SSZ-13 molecular sieve 5C has a SiO₂/Al₂O₃ ratio of 23.16, and the content of copper calculated on the basis of CuO is 3.10 wt%.

### Comparative Example 1: Preparation of Cu-SSZ-13 molecular sieves R1C and RID

### Template-containing Na-SSZ-13 molecular sieve R1

183.0 g of 25 wt% N,N,N-trimethylamantadine hydroxide was added to 531.6 g of deionized water and mixed well, then 18.0 g of sodium hydroxide was added therein and stirred until fully dissolved, then 48.0 g of aluminum isopropoxide was added and mixed well, and finally 150.0 g of white carbon black (precipitation method, the content of SiO₂ was 93 wt%) was added therein and fully stirred for 2 h. The molar ratio of Al₂O₃, SiO₂, N,N,N-trimethylamantadine hydroxide, OH⁻ and H₂O in the initial mixture was 1:20.17:1.89:5.72:322.12, wherein the molar ratio of the template to silica was 0.09 (R/SiO₂ = 0.09). The above mixture was transferred to a stainless steel reactor lined with polytetrafluoroethylene, the reactor was placed in an oven to perform crystallization at 170°C for 48 h, then taken out, quenched, and the crystallization product was subjected to solid-liquid separation, washing and drying to obtain an original powder of template-containing Na-SSZ-13 molecular sieve named as Na-SSZ-13 molecular sieve R1, with SiO₂/Al₂O₃ = 19.36.

### Template-free Na-SSZ-13 molecular sieve R1A

The Na-SSZ-13 molecular sieve R1 was roasted by the steps of placing the Na-SSZ-13 molecular sieve R1 in a muffle furnace, raising the temperature from room temperature to 620°C at a rate of 10°C/min and roasting for 5 h, to obtain a template-free Na-SSZ-13 molecular sieve R1A, with SiO₂/Al₂O₃ = 19.23.

### Template-free Na-SSZ-13 molecular sieve R1B

The Na-SSZ-13 molecular sieve R1 was roasted by the steps of placing the Na-SSZ-13 molecular sieve R1 in a muffle furnace, raising the temperature from room temperature to 360°C at a rate of 2°C/min and maintaining for 3 h, then raising the temperature to 560°C at a rate of 2°C/min and maintaining for 5 h, to obtain a template-free Na-SSZ-13 molecular sieve R1B, with SiO₂/Al₂O₃ = 19.22.

### Cu-SSZ-13 molecular sieve R1C

The Na-SSZ-13 molecular sieve R1A was sequentially subjected to ammonium exchange and copper exchange to obtain a Cu-SSZ-13 molecular sieve R1C, wherein the experimental steps and conditions were the same as thoses for preparing the Cu-SSZ-13 molecular sieve 1C in Example 1.

The obtained Cu-SSZ-13 molecular sieve R1C has a SiO₂/Al₂O₃ ratio of 19.43, and the content of copper calculated on the basis of CuO is 3.07 wt%.

### Cu-SSZ-13 molecular sieve R1D

The Na-SSZ-13 molecular sieve R1B was sequentially subjected to ammonium exchange and copper exchange to obtain a Cu-SSZ-13 molecular sieve RID, wherein the experimental steps and conditions were the same as the experimental conditions for preparing the Cu-SSZ-13 molecular sieve 1D in Example 1.

The obtained Cu-SSZ-13 molecular sieve R1D has a SiO₂/Al₂O₃ ratio of 19.34, and the content of copper calculated on the basis of CuO is 3.16 wt%.

### Comparative Example 2: Preparation of Cu-SSZ-13 molecular sieve R2B

### Template-containing Na-SSZ-13 molecular sieve R2

According to the experimental method and steps of Comparative Example 1, a template-containing Na-SSZ-13 molecular sieve R2 was prepared, wherein the amount of aluminum isopropoxide added was changed from 48.0 g to 30.2 g, and the other conditions remained unchanged. The molar ratio of Al₂O₃, SiO₂, N,N,N-trimethylamantadine hydroxide, OH⁻ and H₂O in the initial mixture was 1:32.01:7.00:9.53:521.40, and the molar ratio of the template to silica was 0.22 (R/SiO₂ = 0.22). The obtained template-containing Na-SSZ-13 molecular sieve is named as R2, with SiO₂/Al₂O₃ = 30.13.

### Template-free Na-SSZ-13 molecular sieve R2A

The template-containing Na-SSZ-13 molecular sieve R1 synthesized in the above steps was roasted by raising the temperature from room temperature to 620°C at a rate of 10°C/min and maintaining for 5 h to obtain a template-free Na-SSZ-13 molecular sieve R2A, with SiO₂/Al₂O₃ = 30.22.

### Cu-SSZ-13 molecular sieve R2B

According to the method and steps of preparing Cu-SSZ-13 molecular sieve 1C in Example 1, the template-free Na-SSZ-13 molecular sieve R2A was sequentially subjected to ammonium exchange and copper exchange, with the copper exchange time changed from 2 h to 3 h and the other experimental conditions unchanged, to obtain Cu-SSZ-13 molecular sieve R2B.

The obtained Cu-SSZ-13 molecular sieve R2B has a SiO₂/Al₂O₃ ratio of 30.27, and the content of copper calculated on the basis of CuO is 3.80 wt%.

### Comparative Example 3: Preparation of Cu-SSZ-13 molecular sieve R3

### Cu-SSZ-13 molecular sieve R3

According to the method and steps of preparing Cu-SSZ-13 molecular sieve 1C in Example 1, the template-free Na-SSZ-13 molecular sieve 1B prepared in Example 1 was sequentially subjected to ammonium exchange and copper exchange, with the copper exchange time changed from 2 h to 0.75 h and the other experimental conditions unchanged, to obtain Cu-SSZ-13 molecular sieve R3.

The obtained Cu-SSZ-13 molecular sieve R3 has a SiO₂/Al₂O₃ ratio of 19.12, and the content of copper calculated on the basis of CuO is 1.85 wt%.

### Comparative Example 4: Preparation of Cu-SSZ-13 molecular sieve R4

The Na-SSZ-13 molecular sieve 5A prepared in Example 5 was sequentially subjected to ammonium exchange and copper exchange. The experimental steps and conditions were exactly the same as those of the Cu-SSZ-13 molecular sieve 5C in Example 5. The obtained sample is named as Cu-SSZ-13 molecular sieve R4.

The obtained Cu-SSZ-13 molecular sieve R4 has a SiO₂/Al₂O₃ ratio of 22.51, and the content of copper calculated on the basis of CuO is 3.15 wt%.

### Example 6: Tests of non-framework aluminum in Na-SSZ-13 molecular sieves 1, 1A and 1B, 2 and 2A, 3 and 3A, 4 and 4A, 5, 5A and 5B, R1, R1A and R1B, R2 and R2A, R3, and R4

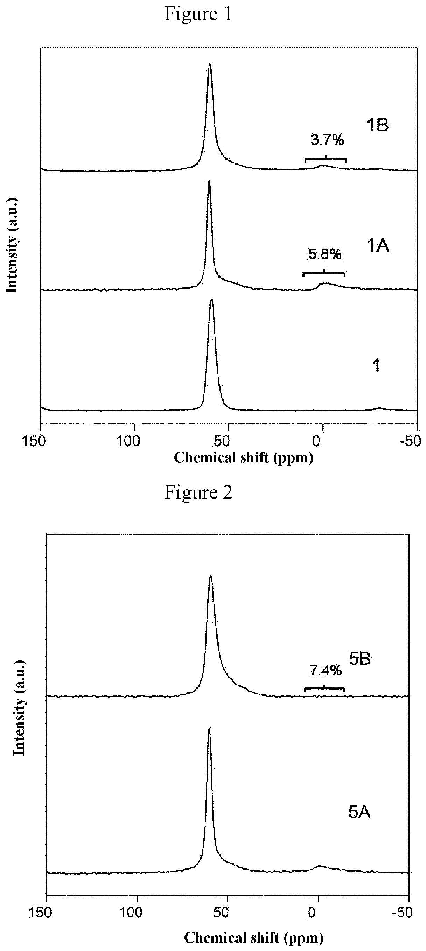

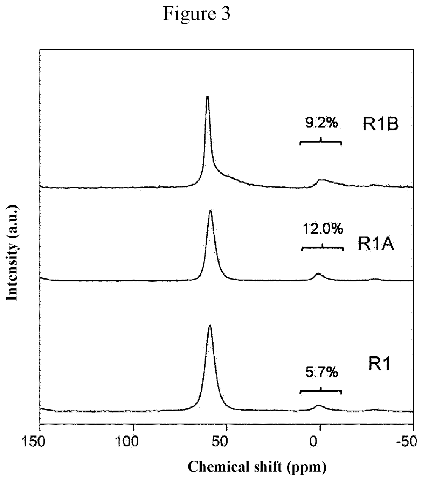

Tests were performed on the contents of non-framework aluminum of Na-SSZ-13 molecular sieves 1, 1A and 1B, 2 and 2A, 3 and 3A, 4 and 4A, 5, 5A and 5B, R1, R1A and R1B, R2 and R2A, R3, and R4, and the preparation conditions and test results were shown in Table 1. The ²⁷ Al NMR spectra of Na-SSZ-13 molecular sieves 1, 1A and 1B (Figure 1), 5, 5A and 5B (Figure 2), R1, R1A and R1B (Figure 3) were taken as examples to illustrate the result spectra of the contents of non-framework aluminum.

**Table 1**

| **Samples** | **R/SiO₂** | **Molecular sieve processing conditions** | **Contents of non-framework aluminum (%, based on ²⁷Al MAS NMR)** |
|---|---|---|---|
| Na-SSZ-13 molecular sieve 1 | 0.22 | Unroasted | 0 |
| Na-SSZ-13 molecular sieve 1A | | Roasted, condition 1 | 5.8 |
| Na-SSZ-13 molecular sieve 1B | | Roasted, condition 2 | 3.7 |
| Na-SSZ-13 molecular sieve 2 | 0.22 | Unroasted | 0 |
| Na-SSZ-13 molecular sieve 2A | | Roasted, condition 2 | 3.1 |
| Na-SSZ-13 molecular sieve 3 | 0.20 | Unroasted | 0.3 |
| Na-SSZ-13 molecular sieve 3A | | Roasted, condition 2 | 4.2 |
| Na-SSZ-13 molecular sieve 4 | 0.20 | Unroasted | 0.1 |
| Na-SSZ-13 molecular sieve 4A | | Roasted, condition 2 | 1.6 |
| Na-SSZ-13 molecular sieve 5 | 0.15 | Unroasted | 1.2 |
| Na-SSZ-13 molecular sieve 5A | | Roasted, condition 1, not pickled with acid | 7.4 |
| Na-SSZ-13 molecular sieve 5B | | Roasted, condition 1, pickled with acid | 0 |
| Na-SSZ-13 molecular sieve R1 | 0.09 | Unroasted | 5.7 |
| Na-SSZ-13 molecular sieve R1A | | Roasted, condition 1 | 12.0 |
| Na-SSZ-13 molecular sieve R1B | | Roasted, condition 2 | 9.2 |
| Na-SSZ-13 molecular sieve R2 | 0.22 | Unroasted | 0 |
| Na-SSZ-13 molecular sieve R2A | | Roasted, condition 1 | 6.0 |
| Na-SSZ-13 molecular sieve R3 | 0.22 | Roasted, condition 1 | 3.7 |
| Na-SSZ-13 molecular sieve R4 | 0.15 | Roasted, condition 1, not pickled with acid | 7.4 |

| | | | |
|---|---|---|---|
| Condition 1: Raising the temperature from room temperature to 620°C at a rate of 10°C/min and roasting for 5 h. Condition 2: Raising the temperature from room temperature to 360°C at a rate of 2°C/min and maintaining for 3 h, then raising the temperature to 560°C at a rate of 2°C/min and maintaining for 5 h. | | | |

The following aspects can be concluded from Table 1 and Figures 1-3:
1. If the molar ratios of the template to silica R/SiO₂ are different, the contents of the non-framework aluminum of the obtained template-containing Na-type molecular sieves are different. The higher the R/SiO₂, the less the content of non-framework aluminum. In Example 1, Example 2 and Comparative Example 2, the molar ratio of the template to silica in the initial mixture is R/SiO₂ = 0.22, and the content of non-framework aluminum in the obtained template-containing Na-SSZ-13 molecular sieves 1, 2 and R2 is 0. In Example 3 and Example 4, the molar ratio of the template to silica in the initial mixture is R/SiO₂ = 0.20, and the contents of non-framework aluminum of the obtained template-containing Na-SSZ-13 molecular sieves 3 and 4 are 0.3 wt% and 0.1 wt%, respectively. In Example 5, the molar ratio of the template to silica in the initial mixture is R/SiO₂ = 0.15, and the content of non-framework aluminum of the template-containing Na-SSZ-13 molecular sieve 5 is 1.2 wt%. In Comparative Example 1, the molar ratio of the template to silica in the initial mixture is R/SiO₂ = 0.09, and the content of non-framework aluminum of the template-containing Na-SSZ-13 molecular sieve R1 is 5.7 wt%.
2. From the results of Example 1 and Comparative Example 1, it can be seen that, if the same sample is roasted under different conditions, the resulting contents of non-framework aluminum are different. The higher the roasting temperature, the higher the content of non-framework aluminum in the molecular sieve after roasting; and the lower the roasting temperature, the lower the content of non-framework aluminum in the molecular sieve after roasting. The template-containing SSZ-13 molecular sieve 1 was roasted under condition 1 and condition 2, respectively, and the contents of non-framework aluminum of the obtained samples 1A and 1B were 5.8 wt% and 3.7 wt%, respectively. The template-containing SSZ-13 molecular sieve R1 was roasted under condition 1 and condition 2, respectively, and the contents of non-framework aluminum of the obtained samples R1A and R1B were 12.0 wt% and 9.2 wt%, respectively.
3. From the results of Example 5, it can be seen that acid pickling can remove non-framework aluminum. The contents of non-framework aluminum of Na-SSZ-13 molecular sieves 5A and 5B are 7.4 wt% and 0, respectively, indicating that the non-framework aluminum can be removed by acid pickling under suitable conditions.

### Example 7: Tests of catalytic conversion rates of Cu-SSZ-13 molecular sieve catalysts 1C, 1D, 1E, 2B, 2C, 3B, 3C, 4B, 4C, 5C, R1C, R1D, R2B, R3, and R4

Tests were performed on the NH₃-SCR catalytic performance of Cu-SSZ-13 molecular sieve catalysts 1C, 1D, 1E, 2B, 2C, 3B, 3C, 4B, 4C and 5C, at a test temperature of 100 to 550°C, under normal pressure, a reaction space velocity of 35000 h⁻¹, a NH₃ concentration of 500 ppm, a NO concentration of 500 ppm, and 5% O₂, with N₂ used as a balance gas. The aging conditions of the sample include 800°C, 10% water vapor, and an aging time of 10 h. The test results of NO conversion rates in the NH₃-SCR reaction at different temperatures for Cu-SSZ-13 molecular sieve catalysts 1C, 1D, 1E, 2B, 2C, 3B, 3C, 4B, 4C, 5C, R1C, R1D, R2B, R3 and R4 before and after aging were shown in Table 2.

**Table 2**

| **Samples** | **Contents of Cu (wt%)** | **Contents of non-framework aluminum of Na-SSZ-13 molecular sieve (%)** | **Conversion rates at 200°C (before aging, %)** | **Conversion rates at 550°C (before aging, %)** | **Conversion rates at 200°C (after aging, %)** | **Conversion rates at 550°C (after aging, %)** |
|---|---|---|---|---|---|---|
| Cu-SSZ-13 molecular sieve catalyst 1C | 3.02 | 5.8 | 95 | 56 | 82 | 45 |
| Cu-SSZ-13 molecular sieve catalyst 1D | 3.06 | 3.7 | 98 | 60 | 90 | 51 |
| Cu-SSZ-13 molecular sieve catalyst 1E | 3.40 | 3.7 | 99 | 65 | 92 | 57 |
| Cu-SSZ-13 molecular sieve catalyst 2B | 2.81 | 3.1 | 91 | 58 | 86 | 50 |
| Cu-SSZ-13 molecular sieve catalyst 2C | 3.44 | 3.1 | 99 | 63 | 90 | 54 |
| Cu-SSZ-13 molecular sieve catalyst 3B | 2.63 | 4.2 | 88 | 56 | 80 | 44 |
| Cu-SSZ-13 molecular sieve catalyst 3C | 3.63 | 4.2 | 98 | 64 | 93 | 54 |
| Cu-SSZ-13 molecular sieve catalyst 4B | 2.56 | 1.6 | 86 | 50 | 80 | 42 |
| Cu-SSZ-13 molecular sieve catalyst 4C | 3.69 | 1.6 | 99 | 66 | 93 | 57 |
| Cu-SSZ-13 molecular sieve catalyst 5C | 3.10 | 0 | 96 | 59 | 88 | 48 |
| Cu-SSZ-13 molecular sieve catalyst R1C | 3.07 | 12.0 | 93 | 50 | 75 | 33 |
| Cu-SSZ-13 molecular sieve catalyst R1D | 3.16 | 9.2 | 91 | 58 | 79 | 47 |
| Cu-SSZ-13 molecular sieve catalyst R2B | 3.80 | 6.0 | 95 | 57 | 82 | 46 |
| Cu-SSZ-13 molecular sieve catalyst R3 | 1.85 | 3.7 | 80 | 41 | 61 | 32 |
| Cu-SSZ-13 molecular sieve catalyst R4 | 3.15 | 7.4 | 91 | 50 | 79 | 41 |

The following aspects can be seen from Table 2:
By combining table 2 with the preparation conditions of Cu-SSZ-13 molecular sieves 1C and R1C, it can be seen that the molar ratio of the template to alumina (R/SiO₂) in the initial mixture used for preparing 1C is 0.09, which is significantly lower than that (R/SiO₂=0.22) in the initial mixture for preparing Cu-SSZ-13 molecular sieve R1C. The roasting conditions for the Cu-SSZ-13 molecular sieves 1C and R1C are the same. The precursor of the Cu-SSZ-13 molecular sieve 1C has a non-framework aluminum content of 5.8 wt%, which is lower than the non-framework aluminum content 12 wt% in the R1C precursor. Before and after hydrothermal aging, the NO conversion rates of the Cu-SSZ-13 molecular sieve catalyst R1C at 200°C and 550°C are lower than those of the Cu-SSZ-13 molecular sieve catalyst 1C, and after hydrothermal aging, the difference between the NO conversion rate of the Cu-SSZ-13 molecular sieve catalyst R1C and the NO conversion rate of the Cu-SSZ-13 molecular sieve catalyst 1C is greater. Similarly, the same rule will be found by comparing the reaction results of Cu-SSZ-13 molecular sieves 1D and R1D.

From Table 2 in combination with the preparation conditions of Cu-SSZ-13 molecular sieves 1C and 1D, it can be seen that the roasting temperature of the Cu-SSZ-13 molecular sieve 1C is 620°C, and the roasting temperature of the Cu-SSZ-13 molecular sieve 1D is 560°C. The content of non-framework aluminum in the precursor of the Cu-SSZ-13 molecular sieve 1C is 5.8 wt%, which is higher than the non-framework aluminum content of 3.7 wt% in the precursor of the Cu-SSZ-13 molecular sieve ID. The NO conversion rates of the Cu-SSZ-13 molecular sieve catalyst 1C at 200°C and 550°C are both lower than those of the Cu-SSZ-13 molecular sieve catalyst 1D, and after hydrothermal aging, the difference between the NO conversion rate of the Cu-SSZ-13 molecular sieve catalyst 1C and the NO conversion rate of the Cu-SSZ-13 molecular sieve catalyst 1D is greater. Similarly, the same rule will be found by comparing the reaction results of Cu-SSZ-13 molecular sieves R1C and R1D.

From Table 2 in combination with the preparation conditions of Cu-SSZ-13 molecular sieves 5C and R4, it can be seen that the preparation steps and conditions of the two samples are the same except that there is no acid pickling step for R4, the content of non-framework aluminum in the precursor of the Cu-SSZ-13 molecular sieve 5C is 7.4 wt%, and the content of non-framework aluminum in the precursor of the Cu-SSZ-13 molecular sieve R4 is 0. Before and after hydrothermal aging, the NO conversion rates of the Cu-SSZ-13 molecular sieve catalyst R4 at 200°C and 550°C are lower than those of the Cu-SSZ-13 molecular sieve catalyst 5C, and the difference between the NO conversion rate of the Cu-SSZ-13 molecular sieve catalyst R4 and the NO conversion rate of the Cu-SSZ-13 molecular sieve catalyst 5C is greater at 550°C.

### Example 8: Tests of catalytic selectivity of Cu-SSZ-13 molecular sieve catalysts 1C, 1D, 1E, 2B, 2C, 3B, 3C, 4B, 4C, 5C, R1C, R1D, R2B, and R4

Tests were performed on the NH₃-SCR catalytic performance of Cu-SSZ-13 molecular sieve catalysts 1C, 1D, 1E, 2B, 2C, 3B, 3C, 4B, 4C, 5C, R1C, RID, R2B, and R4, at a test temperature of 100 to 550°C, under normal pressure, a reaction space velocity of 35000 h⁻¹, a NH₃ concentration of 500 ppm, a NO concentration of 500 ppm, and 5% O₂, with N₂ used as a balance gas. The test results of N₂O selectivity of Cu-SSZ-13 molecular sieve catalysts 1C, 1D, 1E, 2B, 2C, 3B, 3C, 4B, 4C, 5C, R1C, R1D, R2B and R4 in the NH₃-SCR reaction at different temperatures were shown in Table 3.

**Table 3**

| **Samples** | **SiO₂/Al₂O₃** | **Contents of Cu (wt%)** | **Contents of non-framework aluminum of Na-SSZ-13 molecular sieve (%)** | **N₂O selectivity at 200°C (before aging, %)** | **N₂O selectivity at 550°C (before aging, %)** |
|---|---|---|---|---|---|
| Cu-SSZ-13 molecular sieve catalyst 1C | 19.04 | 3.02 | 5.8 | 6.1 | 7.6 |
| Cu-SSZ-13 molecular sieve catalyst 1D | 19.09 | 3.06 | 3.7 | 4.1 | 4.7 |
| Cu-SSZ-13 molecular sieve catalyst 1E | 19.05 | 3.40 | 3.7 | 4.2 | 5.1 |
| Cu-SSZ-13 molecular sieve catalyst 2B | 22.07 | 2.81 | 3.1 | 1.4 | 3.8 |
| Cu-SSZ-13 molecular sieve catalyst 2C | 22.01 | 3.44 | 3.1 | 1.9 | 4.9 |
| Cu-SSZ-13 molecular sieve catalyst 3B | 17.06 | 2.63 | 4.2 | 2.3 | 5.7 |
| Cu-SSZ-13 molecular sieve catalyst 3C | 16.95 | 3.63 | 4.2 | 2.7 | 5.1 |
| Cu-SSZ-13 molecular sieve catalyst 4B | 27.36 | 2.56 | 1.6 | 1.1 | 3.3 |
| Cu-SSZ-13 molecular sieve catalyst 4C | 27.28 | 3.69 | 1.6 | 3.5 | 5.4 |
| Cu-SSZ-13 molecular sieve catalyst 5C | 23.16 | 3.10 | 0 | 0.4 | 2.2 |
| Cu-SSZ-13 molecular sieve catalyst R1C | 19.43 | 3.07 | 12.0 | 17.6 | 21.2 |
| Cu-SSZ-13 molecular sieve catalyst RID | 19.34 | 3.16 | 9.2 | 16.4 | 19.3 |
| Cu-SSZ-13 molecular sieve catalyst R2B | 30.27 | 3.80 | 6.0 | 9.3 | 13.8 |
| Cu-SSZ-13 molecular sieve catalyst R4 | 22.51 | 3.15 | 7.4 | 10.6 | 13.8 |

It can be seen from Table 3 that the selectivity of N₂O in the NH₃-SCR reaction is positively correlated with the content of non-framework aluminum in the precursor of the Cu-SSZ-13 molecular sieve. The higher the content of non-framework aluminum, the higher the selectivity of N₂O. When the content of non-framework aluminum in the precursor of Cu-SSZ-13 molecular sieve 5C (Na-SSZ-13 molecular sieve) is 0, the selectivities of N₂O at 200°C and 550°C are 0.4 ppm and 2.2 ppm, respectively. When the content of non-framework aluminum in the precursor of the Cu-SSZ-13 molecular sieve is 1.6 to 5.8 wt%, the selectivity of N₂O is 1.1 to 7.6 ppm. The contents of non-framework aluminum in the precursors of Cu-SSZ-13 molecular sieves R1C and R1D are 12.0 wt% and 9.2 wt%, respectively, and the selectivity of N₂O is 16.4 to 21.2 ppm.

The above are only the Examples of the present application, and the protection scope of the present application is not limited by these specific Examples, but is determined by the claims of the present application. For a person skilled in the art, the present application can have various modifications and variations. Any modifications, equivalent replacements, improvements and the like made within the technical ideas and principles of the present application shall be included in the protection scope of the present application.

## Claims

1. A molecular sieve Cu-SSZ-13, wherein a content of copper calculated on the basis of CuO in the Cu-SSZ-13 is 2.56 to 3.69 wt%, and a content of non-framework aluminum in the molecular sieve before adding copper is 0 to 8 wt%.

2. The molecular sieve Cu-SSZ-13 according to claim 1, wherein the content of copper calculated on the basis of CuO in the Cu-SSZ-13 is 2.63 to 3.63 wt%.

3. The molecular sieve Cu-SSZ-13 according to claim 2, wherein the content of copper calculated on the basis of CuO in the Cu-SSZ-13 is 2.81 to 3.44 wt%.

4. The molecular sieve Cu-SSZ-13 according to claim 3, wherein the content of copper calculated on the basis of CuO in the Cu-SSZ-13 is 3.10 to 3.40 wt%.

5. The molecular sieve Cu-SSZ-13 according to claim 1, wherein the content of non-framework aluminum in the molecular sieve before adding copper is 0 to 7.4 wt%.

6. The molecular sieve Cu-SSZ-13 according to claim 5, wherein the content of non-framework aluminum in the molecular sieve before adding copper is 0.5 to 4.2 wt%.

7. The molecular sieve Cu-SSZ-13 according to claim 6, wherein the content of non-framework aluminum in the molecular sieve before adding copper is 0.5 to 3.1 wt%.

8. The molecular sieve Cu-SSZ-13 according to claim 1, wherein the Cu-SSZ-13 is a molecular sieve SSZ-13 subjected to copper ion exchange.

9. The molecular sieve Cu-SSZ-13 according to claim 1, wherein a molar ratio of silica to alumina in the Cu-SSZ-13 is 16.95 to 27.28.

10. The molecular sieve Cu-SSZ-13 according to claim 9, wherein the molar ratio of silica to alumina in the Cu-SSZ-13 is 17 to 25.

11. The molecular sieve Cu-SSZ-13 according to claim 10, wherein the molar ratio of silica to alumina in the Cu-SSZ-13 is 19.04 to 23.16.

12. A preparation method of the molecular sieve Cu-SSZ-13 according to any one of claims 1 to 11, wherein the method comprises the following steps:
1) providing a template-containing SSZ-13 molecular sieve, and performing a first roasting step to obtain a SSZ-13 molecular sieve;
2) subjecting the product of step 1) to NH₄⁺ exchange to obtain a precursor NH₄-SSZ-13; and
3) introducing a copper source into the precursor NH₄-SSZ-13 by a liquid-phase ion exchange method, and performing a second roasting step to obtain the Cu-SSZ-13;
wherein, the content of non-framework aluminum in the SSZ-13 molecular sieve is detected to be 0 to 8 wt%.

13. The preparation method according to claim 12, wherein the preparation method of the template-containing SSZ-13 molecular sieve comprises:
(1) mixing an aluminum source, a silicon source, a template, an alkali source and deionized water to obtain an initial mixture; and
(2) subjecting the initial mixture obtained in step (1) to crystallization at 150 to 200°C for 12 to 96 h under authigenic pressure to obtain the template-containing SSZ-13 molecular sieve;
wherein a molar ratio of the template to the silicon source in the initial mixture is 0.12 to 0.22; and
the template is at least one selected from N,N,N-trimethyladamantamine hydroxide, benzyltrimethylamine and choline.

14. The preparation method according to claim 12, wherein the copper source is at least one selected from copper acetate, copper nitrate and copper sulfate.

15. The molecular sieve Cu-SSZ-13 according to claim 12, wherein the temperature of the liquid-phase ion exchange is 20 to 90°C, and the time of the liquid-phase ion exchange is 0.5 to 24 h.

16. The preparation method according to claim 12, wherein the first roasting step comprises:
raising the temperature from room temperature to 550 to 650°C at a rate of 8 to 12°C/min and roasting for 3 to 7 h; or
raising the temperature from room temperature to 300 to 400°C at a rate of 1 to 4°C/min, maintaining for 1 to 5 h, then rising to 500 to 600°C at a rate of 1 to 3°C/min and maintaining for 3 to 7 h.

17. The preparation method according to claim 16, wherein the first roasting step comprises:
raising the temperature from room temperature to 620°C at a rate of 10°C/min and roasting for 5 h; or
raising the temperature from room temperature to 360°C at a rate of 2°C/min, maintaining for 3 h, then rising to 560°C at a rate of 2°C/min and maintaining for 5 h.

18. A catalyst, wherein the catalyst comprises Cu-SSZ-13 which is at least one selected from the Cu-SSZ-13 according to any one of claims 1 to 11 and the Cu-SSZ-13 prepared by the method according to any one of claims 12 to 17.

19. The catalyst according to claim 18, wherein the catalyst comprises the Cu-SSZ-13 deposited on a honeycomb substrate.

20. The catalyst according to claim 19, wherein the honeycomb substrate is selected from a wall-flow substrate or a flow-through substrate.

21. Use of the catalyst according to any one of claims 18 to 20 in the selective catalytic reduction of ammonia with a selectivity of nitrous oxide lower than 15 ppm.
